# EUROPEAN PATENT SPECIFICATION

(11) **EP 2 710 273 B1**
(45) Date of publication and mention of the grant of the patent: **09.09.2015**
(21) Application number: 12726955.3
(22) Date of filing: 21.05.2012
(51) Int. Cl.: F16C 33/20

(54) **SLIDING LAYER FOR MULTILAYER BEARING MATERIAL**
GLEITSCHICHT FÜR MEHRSCHICHTIGEN LAGERWERKSTOFF
COUCHE DE GLISSEMENT POUR UN MATÉRIAU POUR COUSSINETS MULTI-COUCHES

(30) Priority: 20.05.2011 US 201161488507 P
(43) Date of publication of application: 26.03.2014
(73) Proprietor: GGB, Inc., Thorofare, NJ 08086 (US)
(72) Inventor: PENG, Yuan H., Marlton, New Jersey 08053 (US); KIM, Michael, Marlton, New Jersey 08053 (US)
(74) Representative: Estreen, Lars J.F.
(86) International application number: PCT/US2012/038879
(87) International publication number: WO 2012/162258

(56) References cited:
- EP-A1- 0 412 238
- US-A- 5 080 970
- US-A- 5 354 622
- US-A1- 2004 115 465
- US-A1- 2004 126 041

## Description

This application claims priority to U.S. Provisional Application No. 61/488,507, filed May 20, 2011, the entirety of which is hereby incorporated by reference as if set out in full.

### BACKGROUND

Self lubricating bearing materials are generally required for applications that operate in a substantially dry environment or environments where no additional lubricant is present. Of the variety of known plastics and polymer composite bearing materials, those based on polytetrafluoroethylene (PTFE) have received the most proliferated use. PTFE-based materials provide both good wear resistance and low friction. One of best examples of a PTFE-based bearing material includes about 80 vol% PTFE and about 20 vol% lead particles, and is commercially known as DU. DU and other lead-containing bearing materials are especially useful in, for example, belt tensioners and pulley dampeners, as DU and similar materials provide superior wear resistance and can thereby withstand the high frequency oscillation of these devices.

One shortcoming of DU is the use of lead particles in the bearing material. Lead has deleterious environmental and industrial hygienic consequences, and thus has been targeted for elimination in bearing materials. In some industries, regulations have been enacted requiring the use of lead-free materials. Accordingly, efforts have been made to provide a PTFE-based bearing material with similar performance to DU, but which eliminates the presence of lead particles. U.S. Patent No. 6,390,682, describes a PTFE-based bearing material that does not use lead particles, but the disclosed material does not match the durability of lead-containing materials in certain applications, such as in high frequency oscillation devices. Generally speaking, bearing materials that are free of lead, while exhibiting satisfactory performance in some operating conditions, are not capable of operating under the same broad range of conditions as is possible for bearing materials containing lead.

US 2004 0115465 A1 and US 2004 0126041 A1 disclose bearing friction composite materials comprising a low friction layer made from PTFE and zinc sulphide. The sliding layer may comprise the PTFE in an amount of at least 60 vol% and the zinc sulphide in an amount of 10-25 vol%.

### SUMMARY

This Summary is provided to introduce a selection of concepts in a simplified form that are further described below in the Detailed Description. This Summary, and the foregoing Background, is not intended to identify key aspects or essential aspects of the claimed subject matter. Moreover, this Summary is not intended for use as an aid in determining the scope of the claimed subject matter.

In some embodiments, a sliding layer for a multilayer bearing material includes polytetrafluoroethylene (PTFE), sphalerite (ZnFeS), and secondary lubricants. The PTFE can generally be present in an amount of from 67.5 to less than 90 vol%. The sphalerite can be present in an amount of from 10 to 20 vol%. The secondary lubricant can be present in an amount of from greater than 0 to 12.5 vol%. In some embodiments, the secondary lubricants included in the sliding layer are graphite and antimony oxide. In such embodiments, the graphite can be present in an amount of from greater than 0 to 10 vol% and the antimony oxide can be present in an amount of from 0.5 to 2.5 vol%. In some embodiments, the only secondary lubricant included in the sliding layer is graphite, and the graphite is present in the sliding layer in an amount of from greater than 0 to 10 vol%. In embodiments where antimony oxide is included as a secondary lubricant, the antimony oxide can be in the form of nano-scale particulate, such as particulate having a diameter in the range of from 30 to 50 nm.

The sliding layer described above provides a lead-free, high frequency and low amplitude motion (i.e., dithering) resilient dry bearing material. The sliding layer used in a multilayer bearing material can generally meet the performance of previously known PTFE / lead bearing materials in both high speed oscillation and in higher speed thrust washing testing, making the disclosed material useful in industries where bearings capable of functioning under broad operating conditions are required.

These and other aspects of the present system will be apparent after consideration of the Detailed Description and Figures herein. It is to be understood, however, that the scope of the invention shall be determined by the claims as issued and not by whether given subject matter addresses any or all issues noted in the Background or includes any features or aspects recited in this Summary.

### DRAWINGS

Non-limiting and non-exhaustive embodiments of the present invention, including the preferred embodiment, are described with reference to the following figures, wherein like reference numerals refer to like parts throughout the various views unless otherwise specified.

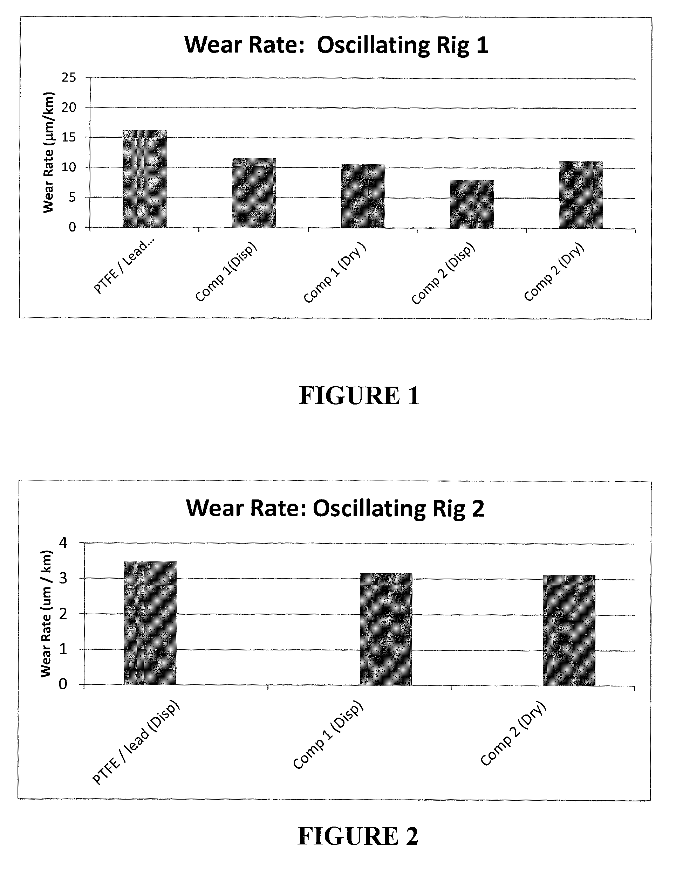

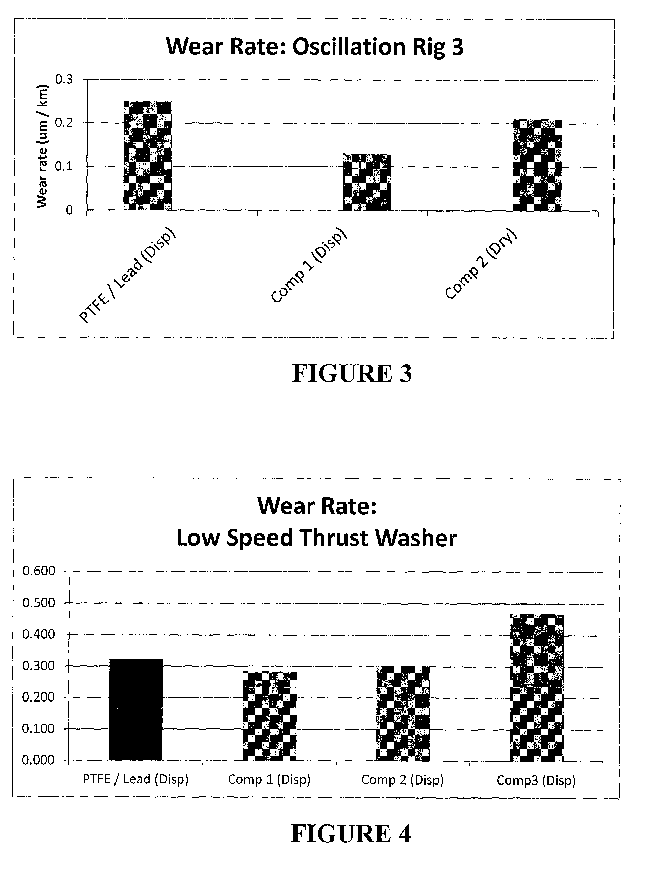

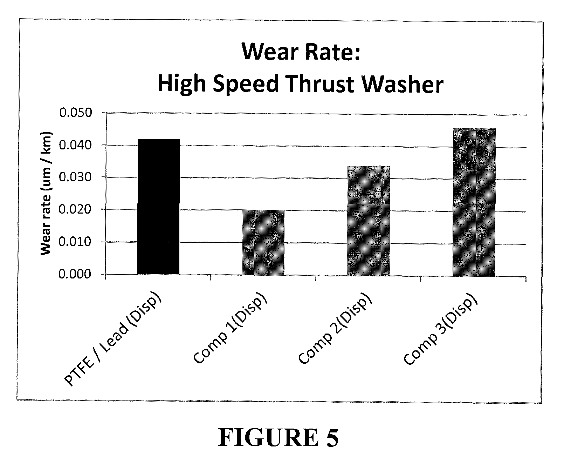

Figure 1-5 are bar graphs illustrating comparative results of performance tests carried out on sliding layers according to embodiments described herein and sliding layers previously known in the art.

### DETAILED DESCRIPTION

Embodiments are described more fully below with reference to the accompanying figures, which form a part hereof and show, by way of illustration, specific exemplary embodiments. These embodiments are disclosed in sufficient detail to enable those skilled in the art to practice the invention. However, embodiments may be implemented in many different forms and should not be construed as being limited to the embodiments set forth herein. The following detailed description is, therefore, not to be taken in a limiting sense. Weight percentages provided herein are on a dry weight basis unless otherwise.

In some embodiments a sliding layer for a multilayer bearing material includes polytetrefluoroethylene (PTFE), sphalerite, and secondary lubricants, and is free of lead. As used herein, the term free of lead or lead free means no lead is intentionally added to the sliding layer of the bearing material.

The PTFE can be present in the sliding layer in the range of from 67.5 to less than 90 vol%. The PTFE is generally the predominant component in the sliding layer, and serves as the basis for providing a sliding layer having good wear resistance and low friction. Other polymer materials that can be used in conjunction with or as an alternative to PTFE include, but are not limited to, polychlorotrifluoroethylene (PCTFE), fluorinated ethylene propylene (FEP), polyvinyl fluoride (PVF), polyvinylidene difluoride (PVDF), ethylene chlorotrifluoroethylene (ECTFE), perfluoroalkoxy (PFA), and ethylene tetrafluoroethylene, ETFE.

Sphalerite (ZnFeS) is a mineral that is present in the sliding layer in the range of from 10 to 20 vol%. The sphalerite can serve as a lubricant in the sliding layer and allows the sliding layer to be self lubricating and thereby suitable for use in dry environments or environments where no additional lubrication is available or provided.

Other lubricants present in the sliding layer include from great than 0 to 12.5 vol% secondary lubricants. In some embodiments, the secondary lubricants present in the sliding layer are selected from graphite, boron nitride, antimony oxide, and mixtures thereof. In some embodiments, both graphite and antimony oxide are present in the sliding layer as the secondary lubricants. When graphite and antimony oxide are present in the sliding layer as the secondary lubricants, the graphite can be present in the range of from greater than 0 to 10 vol% and the antimony oxide can be present in the range of from 0.5 to 2.5 vol%.

The antimony oxide is preferably present in the sliding layer in the form of nano-scale particulate. In some embodiments, the antimony oxide particulate in the sliding layer has a diameter in the range of from 30 to 50 nm. The presence of antimony oxide in the sliding layer is believed to contribute significantly to the ability of the sliding layer to meet the performance of previously known PTFE / lead bearing materials in both high speed oscillation and in higher speed thrust washer testing.

In some embodiments, the greater than 0 to 12.5 vol% of secondary lubricant includes only graphite. In other words, the sliding layer does not include boron nitride or antimony oxide as a secondary lubricant. In some embodiments, the sliding layer can include from 70 to less than 90 vol% PTFE, from 10 to 20 vol% sphalerite, and from greater than 0 to 10 vol% graphite. The combination of graphite and sphalerite in the sliding layer is believed to provide a synergistic effect that maximizes the wear performance of the sliding layer in, for example, application under moderate load and speed conditions.

In certain exemplary embodiments, the sliding layer can include 78.5 vol% PTFE, 16 vol% sphalerite, 4 vol% graphite, and 1.5 vol% antimony oxide. In other exemplary embodiments, the sliding layer can include 80 vol% PTFE, 16 vol% sphalerite, and 4 vol% graphite.

Any embodiment of the sliding layer described above can be combined with other layers to form a multilayer bearing material. In some embodiments, the multilayer bearing material includes the sliding layer backed by a bronze layer constructed of sintered metal powder and processed to retain a controlled level of porosity (e.g., 30 v/o). The porosity of the bronze layer can be filled with material of the sliding layer. The bronze backed sliding layer is then supported by a steel layer. The bronze layer is sintered to the steel layer to achieve a solid bond, and the steel acts to hold the other components together, lend structural support, give a general shape to the bearing material, and provide retention force when the bearing material in inserted into a housing for use in an application. In some embodiments, the sliding layer will have a thickness in the range of from 1 to 125 µm, the bronze backing layer will have a thickness in the range of from 50 to 200 µm, and the steel layer will have a thickness in the range of from 0.25 to 3.50 mm.

Embodiments of the sliding layer described herein can be made using a variety of methods known to those of ordinary skill in the art of bearing materials. For example, dispersion based processing, such as described in U.S. Patent No. 5,911,514, which is owned by the present applicant and incorporated herein by reference as if set out in full, can be used to make the sliding layer and the multilayer bearing material in which the sliding layer is used.

A process for impregnating the sliding layer described herein into a porous metallic layer (i.e., a bronze backing layer) on a metal backing layer (i.e., a steel layer) can include spreading wet paste or lubricated dry powder onto the porous metallic layer and compacting the wet paste or lubricated dry powder into the pores of the porous metallic layer via rolling. The wet paste can be made by mixing an aqueous dispersion of PTFE and filler material (e.g., the lubricants discussed above) with an organic lubricant, such as volatile organic compounds (VOCs). The mixture is then coagulated to form the paste for impregnation. Alternatively, dry PTFE resin, fillers, and lubricant can be mechanically mixed to form a lubricated dry powder suitable for impregnations. Once the wet paste or lubricated dry powder is compacted into the porous metallic layer, the metal backing layer is heated using, for example, an induction furnace, to drive off any residual water and organic lubricant in the paste. Heating the metal backing layer also melts or sinters the PTFE in contact with the porous metallic layer and/or the backing layer to thereby bond the sliding layer to the other layers of the multilayer bearing material.

### EXAMPLES

The following sliding layer compositions were tested to determine the performance of the sliding layers under various conditions.

**PTFE / Lead:** A previously known sliding composition of about 80 vol% PTFE and 20 vol% lead formed using well known dispersion method.

**Composition 1 (Dispersion):** Sliding layer including 78.5 vol% PTFE, 16 vol% sphalerite, 4 vol% graphite, 1.5 vol% antimony oxide, and formed using well known dispersion method. Composition 1 (Dry Powder): Sliding layer including 78.5 vol% PTFE, 16 vol% sphalerite, 4 vol% graphite, 1.5 vol% antimony oxide, and formed using dry powder method.

**Composition 2 (Dispersion):** Sliding layer including 80 vol% PTFE, 16 vol% sphalerite, 4 vol% graphite, and formed using well known dispersion method.

**Composition 2 (Dry Powder):** Sliding layer including 80 vol% PTFE, 16 vol% sphalerite, 4 vol% graphite, and formed using dry powder method.

**Composition 3 (Dispersion):** Sliding layer including 80 vol% PTFE, 20 vol% sphalerite, and formed using well known dispersion method.

### Test Conditions

| | |
|---|---|
| Oscillating rig 1: | 70MPa; +/- 30° oscillation; 0.25 Hz |
| Oscillating rig 2: | 30 MPa; +/- 5° oscillation; 3.3 Hz |
| Oscillating rig 3: | 4.3 MPa; +/- 5° oscillation; 30 Hz |
| High speed thrust washer rig | 0.85 MPa; 0.56 m/s; continuous rotation |
| Low speed thrust washer rig: | 2.5 MPa; 0.31 m/s; continuous rotation |

Figures 1-5 show a comparison of test results on the various sliding layers under various test conditions.

Wear data show that Compositions 1 and 2, regardless of preparation method, are equal or similar to the PTFE / Lead composition in oscillating rigs 1 and 2. Composition 1 is also superior to PTFE / Lead composition and Composition 2 in higher speed wear tests (both oscillating rig 1 and high speed thrust washer rig. Composition 3 is inferior to Composition 1, Composition 2, and PTFE / Lead composition in both thrust washer tests.

## Claims

1. A sliding layer for a multilayer bearing comprising:
67.5 to less than 90 vol% polytetrafluoroethylene;
10 to 20 vol% primary lubricant, wherein the primary lubricant is sphalerite; and
greater than 0 to 12.5 vol% secondary lubricant;
wherein sphalerite includes zinc, iron, and sulphur.

2. The sliding layer as claimed in claim 1, wherein the secondary lubricant is selected from the group consisting of graphite, antimony oxide, boron nitride, and combinations thereof.

3. The sliding layer as claimed in claim 1, wherein the secondary lubricant comprises:
0.5 to 2.5 vol% antimony oxide; and
greater than 0 to 10 vol% graphite.

4. The sliding layer as claimed in claim 3, wherein the antimony oxide comprises nano-scale particulate having a diameter in the range of from 30 to 50 nm.

5. The sliding layer as claimed in claim 1, wherein the sliding layer comprises:
78.5 vol% polytetrafluoroethylene;
16 vol% sphalerite; and
5.5 vol% secondary lubricant.

6. The sliding layer as claimed in claim 5, wherein the secondary lubricant comprises:
4 vol% graphite; and
1.5 vol% antimony oxide.

7. The sliding layer as claimed in claim 1, wherein the sliding layer is disposed on a bronze layer, and the bronze layer is disposed on a steel layer.

8. The sliding layer as claimed in claim 7, wherein the sliding layer has a thickness in the range of from 1 to 125 µm.

9. A sliding layer for a bearing comprising:
70 to less than 90 vol% polytetrafluoroethylene;
10 to 20 vol% primary lubricant, wherein the primary lubricant is sphalerite; and
greater than 0 to 10 vol% secondary lubricant, wherein the secondary lubricant comprises graphite;
wherein sphalerite includes zinc, iron, and sulphur.

10. The sliding layer as claimed in claim 9, wherein the sliding layer comprises:
80 vol% polytetrafluoroethylene;
16 vol% sphalerite; and
4 vol% graphite.

11. The sliding layer as claimed in claim 9, wherein the sliding layer is disposed on a bronze layer, and the bronze layer is disposed on a steel layer.

12. The sliding layer as claimed in claim 11, wherein the sliding layer has a thickness in the range of from 1 to 125 µm.

13. The sliding layer as claimed in claim 9, wherein graphite is the only the secondary lubricant present in the sliding layer.

14. The sliding layer as claimed in claims 1 and 9, wherein the sliding layer is free of lead.

15. The sliding layer as claimed in claims 1 and 9, wherein the sliding layer is substantially free of lead.

## Patentansprüche

1. Gleitschicht für ein Mehrschichtlager, umfassend:
67,5 bis weniger als 90 Vol.-% Polytetrafluorethylen;
10 bis 20 Vol.-% primäres Schmiermittel, wobei das primäre Schmiermittel Sphalerit ist; und
mehr als 0 bis 12,5 Vol.-% sekundäres Schmiermittel;
wobei der Sphalerit Zink, Eisen und Schwefel umfasst.

2. Gleitschicht nach Anspruch 1, wobei das sekundäre Schmiermittel aus der Gruppe ausgewählt ist bestehend aus Graphit, Antimonoxid, Bornitrid und Kombinationen davon.

3. Gleitschicht nach Anspruch 1, wobei das sekundäre Schmiermittel Folgendes umfasst:
0,5 bis 2,5 Vol.-% Antimonoxid; und
mehr als 0 bis 10 Vol.-% Graphit.

4. Gleitschicht nach Anspruch 3, wobei das Antimonoxid teilchenförmige Substanz im Nanomaßstab umfasst, die einen Durchmesser im Bereich von 30 bis 50 nm aufweist.

5. Gleitschicht nach Anspruch 1, wobei die Gleitschicht Folgendes umfasst:
78,5 Vol.-% Polytetrafluorethylen;
16 Vol.-% Sphalerit; und
5,5 Vol.-% sekundäres Schmiermittel.

6. Gleitschicht nach Anspruch 5, wobei das sekundäre Schmiermittel Folgendes umfasst:
4 Vol.-% Graphit; und
1,5 Vol.-% Antimonoxid.

7. Gleitschicht nach Anspruch 1, wobei die Gleitschicht sich auf einer Bronzeschicht befindet und die Bronzeschicht sich auf einer Stahlschicht befindet.

8. Gleitschicht nach Anspruch 7, wobei die Gleitschicht eine Dicke im Bereich von 1 bis 125 µm aufweist.

9. Gleitschicht für ein Lager, umfassend:
70 bis weniger als 90 Vol.-% Polytetrafluorethylen;
10 bis 20 Vol.-% primäres Schmiermittel, wobei das primäre Schmiermittel Sphalerit ist; und
mehr als 0 bis 10 Vol.-% sekundäres Schmiermittel, wobei das sekundäre Schmiermittel Graphit umfasst;
wobei der Sphalerit Zink, Eisen und Schwefel umfasst.

10. Gleitschicht nach Anspruch 9, wobei die Gleitschicht Folgendes umfasst:
80 Vol.-% Polytetrafluorethylen;
16 Vol.-% Sphalerit; und
4 Vol.-% Graphit.

11. Gleitschicht nach Anspruch 9, wobei die Gleitschicht sich auf einer Bronzeschicht befindet und die Bronzeschicht sich auf einer Stahlschicht befindet.

12. Gleitschicht nach Anspruch 11, wobei die Gleitschicht eine Dicke im Bereich von 1 bis 125 µm aufweist.

13. Gleitschicht nach Anspruch 9, wobei der Graphit das einzige sekundäre Schmiermittel ist, das in der Gleitschicht vorliegt.

14. Gleitschicht nach den Ansprüchen 1 und 9, wobei die Gleitschicht frei von Blei ist.

15. Gleitschicht nach den Ansprüchen 1 und 9, wobei die Gleitschicht im Wesentlichen frei von Blei ist.

## Revendications

1. Couche de glissement pour un support multicouche comprenant :
67,5 à moins de 90 % en volume de polytétrafluoroéthylène ;
10 à 20 % en volume d'un lubrifiant primaire, dans laquelle le lubrifiant primaire est la sphalérite ; et
plus de 0 à 12,5 % en volume d'un lubrifiant secondaire ;
dans laquelle la sphalérite comprend du zinc, du fer et du soufre.

2. Couche de glissement selon la revendication 1, dans laquelle le lubrifiant secondaire est choisi dans le groupe constitué du graphite, de l'oxyde d'antimoine, du nitrure de bore et de combinaisons de ceux-ci.

3. Couche de glissement selon la revendication 1, dans laquelle le lubrifiant secondaire comprend :
0,5 à 2,5 % en volume d'oxyde d'antimoine ; et
plus de 0 à 10 % en volume de graphite.

4. Couche de glissement selon la revendication 3, dans laquelle l'oxyde d'antimoine comprend des particules à l'échelle du nanomètre ayant un diamètre dans la plage de 30 à 50 nm.

5. Couche de glissement selon la revendication 1, dans laquelle la couche de glissement comprend : 78,5 % en volume de polytétrafluoroéthylène ;
16 % en volume de sphalérite ; et
5,5 % en volume de lubrifiant secondaire.

6. Couche de glissement selon la revendication 5, dans laquelle le lubrifiant secondaire comprend :
4 % en volume de graphite ; et
1,5 % en volume d'oxyde d'antimoine.

7. Couche de glissement selon la revendication 1, dans laquelle la couche de glissement est disposée sur une couche de bronze et la couche de bronze est disposée sur une couche d'acier.

8. Couche de glissement selon la revendication 7, dans laquelle la couche de glissement a une épaisseur dans la plage de 1 à 125 µm.

9. Couche de glissement pour un support comprenant :
70 à moins de 90 % en volume de polytétrafluoroéthylène ;
10 à 20 % en volume d'un lubrifiant primaire, dans laquelle le lubrifiant primaire est la sphalérite ; et
plus de 0 à 10 % en volume d'un lubrifiant secondaire, dans laquelle le lubrifiant secondaire comprend du graphite ;
dans laquelle la sphalérite comprend du zinc, du fer et du soufre.

10. Couche de glissement selon la revendication 9, dans laquelle la couche de glissement comprend : 80 % en volume de polytétrafluoroéthylène ;
16 % en volume de sphalérite ; et
4 % en volume de graphite.

11. Couche de glissement selon la revendication 9, dans laquelle la couche de glissement est disposée sur une couche de bronze et la couche de bronze est disposée sur une couche d'acier.

12. Couche de glissement selon la revendication 11, dans laquelle la couche de glissement a une épaisseur dans la plage de 1 à 125 µm.

13. Couche de glissement selon la revendication 9, dans laquelle le graphite est le seul lubrifiant secondaire présent dans la couche de glissement.

14. Couche de glissement selon l'une quelconque des revendications 1 à 9, dans laquelle la couche de glissement est dépourvue de plomb.

15. Couche de glissement selon l'une quelconque des revendications 1 à 9, dans laquelle la couche de glissement est sensiblement dépourvue de plomb.
